# EUROPEAN PATENT APPLICATION

(11) **EP 4 379 880 A2**
(43) Date of publication of application: **05.06.2024**
(21) Application number: 23210268.1
(22) Date of filing: 16.11.2023
(51) Int. Cl.: H01M 10/04, H01M 10/0585, H01M 50/105

(54) **LAMINATED BATTERY AND METHOD OF MANUFACTURING LAMINATED BATTERY**

(30) Priority: 29.11.2022 JP 2022190795
(71) Applicant: TOYOTA JIDOSHA KABUSHIKI KAISHA, Toyota-shi, Aichi-ken, 471-8571 (JP)
(72) Inventor: KAKISHITA, Kenichi, Toyota-shi, 471-8571 (JP)
(74) Representative: D Young & Co LLP

(57) **Abstract**

A laminated battery has an electrode body and a laminate sheet covering the electrode body, and has a fused portion at which one end side and another end side of the laminate sheet that covers the electrode body are fused together. The fused portion has a step portion at which a thickness of a region near the electrode body side is thinner than a thickness of a region far from the electrode body side. Ratio (L_{S1}/L_{E}) of outer peripheral length L_{E} of the electrode body and inner peripheral length Lsi of the laminate sheet that covers the electrode body is greater than or equal to 1.00 and less than or equal to 1.05.

## Description

### BACKGROUND

### Technical Field

The present disclosure relates to a laminated battery and a method of manufacturing a laminated battery.

### Related Art

A battery such as a lithium ion secondary battery or the like usually has an electrode body having a positive electrode current collector, a positive electrode active material layer, an electrolyte layer, a negative electrode active material layer and a negative electrode current collector. The electrode body is, for example, sealed in an internal space that is surrounded by an exterior member. Japanese Patent Application Laid-Open (JP-A) No. 2011-108623 discloses a lithium polymer secondary battery including an electrode assembly, an exterior member that surrounds the exterior of the electrode assembly, and first and second covers that seal the exterior member, and in which a first electrode terminal and a second electrode terminal are pulled-out to the exterior via the first cover and the second cover, respectively. Note that a laminate film is disclosed as the exterior member in Japanese Patent Application Laid-Open (JP-A) No. 2011-108623.

### SUMMARY

Conventionally, a laminating device that laminates an electrode by a laminate sheet carries out the laminating of electrodes of various sizes, i.e., electrodes at which there is dispersion in sizes. However, at the time when small-sized electrodes are laminated, the laminate sheet and the electrode cannot be made to adhere together precisely, and there are cases in which excess portions (i.e., slack) form at the laminate sheet, and wrinkles arise at these excess portions. At portions of a laminate sheet at which wrinkles form, damage or breakage may occur, and it is easy for the structural durability to deteriorate.

The present disclosure was made in view of the above-described circumstances, and an object thereof is to provide a laminated battery at which the formation of wrinkles at a laminate sheet is suppressed, and a method of manufacturing the laminated battery.
<1> A laminated battery including:
   an electrode body; and
   a laminate sheet that covers the electrode body,
   wherein:
      the laminated battery has a fused portion at which one end side and another end side of the laminate sheet, which covers the electrode body, are fused,
      the fused portion has a step portion at which a thickness of a region near an electrode body side is thinner than a thickness of a region far from the electrode body side, and
      a ratio (L_{S1}/L_{E}) of an outer peripheral length L_{E} of the electrode body and an inner peripheral length L_{S1} of the laminate sheet that covers the electrode body is greater than or equal to 1.00 and less than or equal to 1.05.
<2> The laminated battery of <1>, wherein the ratio (L_{S1}/L_{E}) is 1.00.
<3> The laminated battery of <1> or <2>, wherein, at the step portion, a difference (t1-t2) between a thickness t1 at a thickest place of the region near the electrode body side and a thickness t2 at a thinnest place of the region far from the electrode body side is greater than or equal to 10 µm and less than or equal to 150 µm.
<4> A method of manufacturing a laminated battery having:
   an electrode body; and
   a laminate sheet that covers the electrode body,
   wherein:
      the laminated battery has a fused portion at which one end side and another end side of the laminate sheet, which covers the electrode body, are fused,
      the fused portion is formed by fusing steps of that are carried out two or more times, while shifting a position;
      a region, which is further from an electrode body side than a region fused in a fusing step of a second time, is fused in a fusing step of a first time; and
      a region, which is nearer to the electrode body side than a region fused in the fusing step of the first time, is fused in the fusing step of the second time, and fusing in the fusing step of the second time is carried out such that a ratio ((L_{S0}-2×L₂)/L_{E}) of a length obtained by subtracting a value that is twice a length L₂ from an end portion at the electrode body side of the region fused in the fusing step of the first time to an end portion at the electrode body side of the region fused in the fusing step of the second time, from an inner peripheral length L_{S0} of the laminate sheet after fusing in the fusing step of the first time and before fusing in the fusing step of the second time, and an outer peripheral length L_{E} of the electrode body, is greater than or equal to 1.00 and less than or equal to 1.05.
<5> The method of manufacturing a laminated battery of <4>, wherein:
   the fused portion, after having undergone the fusing step of the second time, has a step portion at which a thickness of a region near the electrode body side is thinner than a thickness of a region far from the electrode body side, and
   at the step portion, a difference (t1-t2) between a thickness t1 at a thickest place of the region near the electrode body side and a thickness t2 at a thinnest place of the region far from the electrode body side is greater than or equal to 10 µm and less than or equal to 150 µm.

In accordance with the present disclosure, there can be provided a laminated battery at which the formation of wrinkles at a laminate sheet is suppressed, and a method of manufacturing the laminated battery.

### BRIEF DESCRIPTION OF THE DRAWINGS

Exemplary embodiments of the present invention will be described in detail based on the following figures, wherein:
Fig. 1 is a schematic sectional view illustrating respective steps of a method of manufacturing a laminated battery relating to an embodiment of the present disclosure;
Fig. 2 is a schematic sectional view illustrating respective steps of the method of manufacturing a laminated battery relating to the embodiment of the present disclosure;
Fig. 3 is a schematic sectional view illustrating respective steps of the method of manufacturing a laminated battery relating to the embodiment of the present disclosure;
Fig. 4 is a schematic sectional view illustrating respective steps of the method of manufacturing a laminated battery relating to the embodiment of the present disclosure;
Fig. 5 is a schematic sectional view illustrating respective steps of the method of manufacturing a laminated battery relating to the embodiment of the present disclosure;

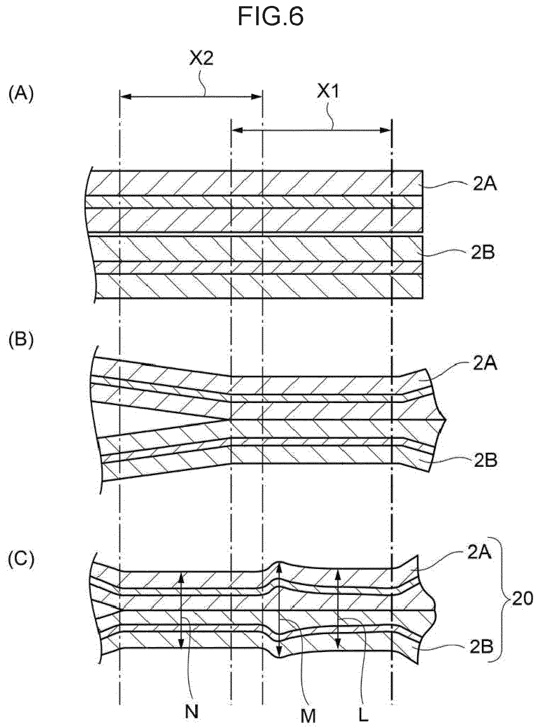

Fig. 6 is a schematic sectional view illustrating, in an enlarged manner, a fused portion at the time when a laminated battery relating to an embodiment of the present disclosure is manufactured, where (A) is an enlarged sectional view illustrating the fused portion before a fusing step of a first time is carried out, (B) is an enlarged sectional view illustrating the fused portion after the fusing step of the first time has been carried out and before a fusing step of a second time is carried out, and (C) is an enlarged sectional view illustrating the fused portion after the fusing step of the second time has been carried out; and
Fig. 7 is a schematic sectional view illustrating an example of a solid-state battery.

### DETAILED DESCRIPTION

A laminated battery and method of manufacture thereof of the present disclosure are described in detail hereinafter by using the drawings. The respective drawings described hereinafter are schematic illustrations, and the sizes and shapes of respective portions are exaggerated when appropriate in order to facilitate understanding. Further, in the present specification, use of simply "above" and "below" when describing aspects in which a given member is disposed with respect to another member encompasses both cases in which the given member is disposed directly above or directly below the another member so as to contact the another member, and cases in which the given member is disposed above or below the another member with a separate member interposed therebetween, unless otherwise indicated.

### <Method of Manufacturing Laminated Battery>

First, a method of manufacturing a laminated battery relating to the present disclosure is described by using the drawings.

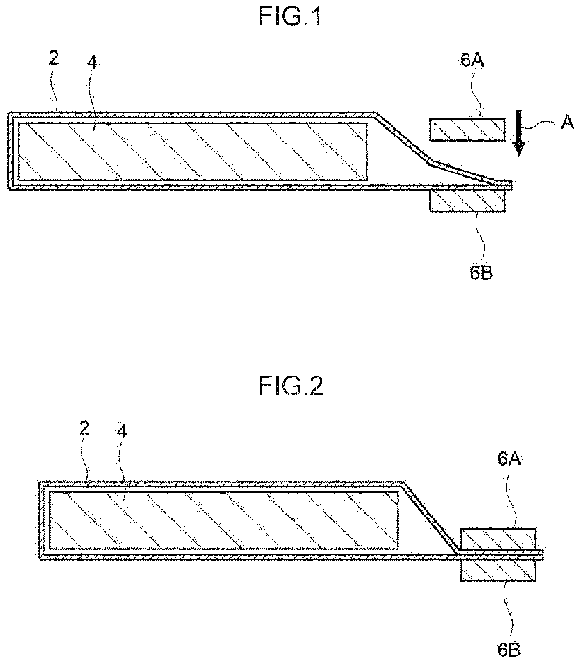

Fig. 1 through Fig. 5 are schematic sectional views illustrating respective steps of the method of manufacturing a laminated battery relating to an embodiment of the present disclosure.

### •Preparation Step

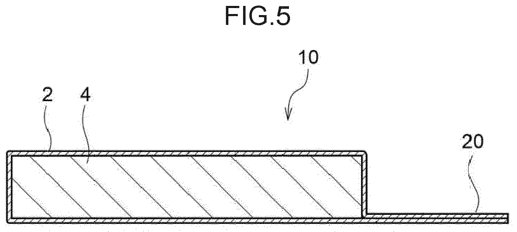

First, as illustrated in Fig. 1, a single laminate sheet 2 is folded-over and made to cover an electrode body 4, and one end side and another end side of the laminate sheet 2 are superposed together. Thereafter, by a fusing step of a first time and a fusing step of a second time that are described hereinafter, fusing is carried out two times while shifting the position. Due thereto, as illustrated in Fig. 5, a fused portion 20 at which the one end side and the another end side of the laminate sheet 2 are fused is formed.

### •Fusing Step of First Time

Of the region where the one end side and the another end side of the laminate sheet 2 are superposed together, a region that is further from the electrode body 4 side than the region that is fused in the fusing step of the second time is fused in the fusing step of the first time. Namely, as illustrated in Fig. 1, a fusing member 6B is disposed so as to contact one side of a fusion region of a first time, and a fusing member 6A is moved in the arrow A direction from the opposite side. Due thereto, the fusion region of the first time is sandwiched between the fusing members 6A and 6B as illustrated in Fig. 2. Thereafter, by carrying out heating and pressurizing of the laminate sheet 2 by the fusing members 6A and 6B, the fusion region of the first time is fused.

In this way, only a region, which is further away from the electrode body side than the region that is fused in the fusing step of the second time, is fused first by the fusing step of the first time. Due thereto, of the region that ultimately becomes the fused portion 20 where the one end side and the another end side of the laminate sheet 2 are fused together, the region thereof at the distal end side is fixed.

### •Fusing Step of Second Time

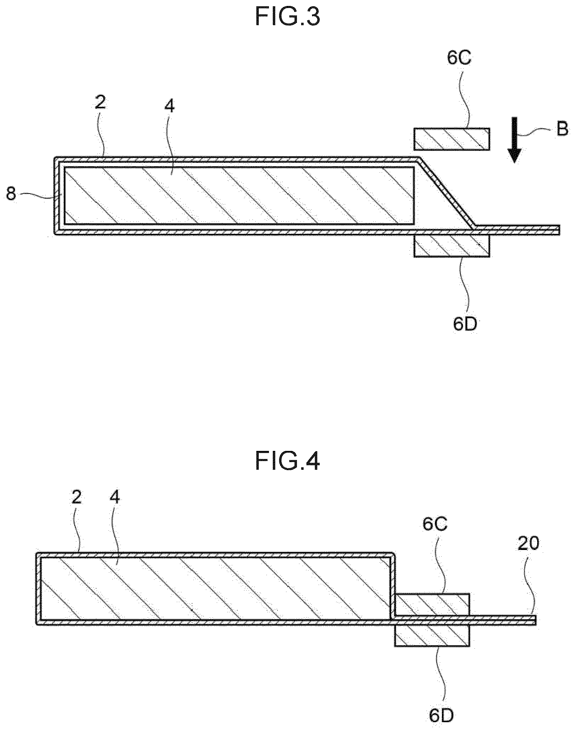

Next, in the fusing step of the second time, as illustrated in Fig. 3, a region, which is closer to the electrode body 4 side than the region that was fused in the fusing step of the first time, is fused. As illustrated in Fig. 3, a fusing member 6D is made to abut one side of a fusion region of a second time, and a fusing member 6C is moved in the arrow B direction from the opposite side. Due thereto, as illustrated in Fig. 4, the fusion region of the second time is sandwiched between the fusing members 6C and 6D. Thereafter, by carrying out heating and pressurizing of the laminate sheet 2 by the fusing members 6C and 6D, the fusion region of the second time is fused.

Note that, in the fusing step of the second time, fusing is carried out such that a ratio ((L_{S0}-2×L₂)/L_{E}) of a length that is obtained by subtracting a value that is twice length L₂ from the end portion at the electrode body 4 side of the region that is fused in the fusing step of the first time to the end portion at the electrode body 4 side of the region that is fused in the fusing step of the second time, from an inner peripheral length L_{S0} of the laminate sheet 2 after the fusing in the fusing step of the first time and before the fusing in the fusing step of the second time, and an outer peripheral length L_{E} of the electrode body 4, is greater than or equal to 1.00 and less than or equal to 1.05.
Here, the inner peripheral length L_{S0} of the laminate sheet 2 after the fusing in the fusing step of the first time and before the fusing in the fusing step of the second time means the length of the shortest distance of the portion, which is other than the region fused in the fusing step of the first time, at the electrode body side surface of the laminate sheet (i.e., the length in the direction of wrapping the one laminate sheet around the electrode body). Further, the length L₂ from the end portion at the electrode body side of the region that is fused in the fusing step of the first time to the end portion at the electrode body side of the region that is fused in the fusing step of the second time, means the length of the region that is not fused in the fusing step of the first time, of the region that ultimately becomes the fused portion (i.e., the length in the direction in which the fused portion extends from the electrode body). Further, the outer peripheral length L_{E} of the electrode body means the total length of the shortest distances of the four surfaces in the direction of wrapping the one laminate sheet around.

In the fusing step of the second time, before the fusion region of the second time at the laminate sheet 2 is sandwiched in by the fusing members 6C and 6D, as illustrated in Fig. 3, a gap 8 exists between the electrode body 4 and the laminate sheet 2. However, in the state in which the distal end side of the region, which ultimately becomes the fused portion, is fixed by the fusing step of the first time, the region that is nearer to the electrode body 4 side than the fusion region of the first time is sandwiched by the fusing members 6C and 6D, and, due thereto, the regions of the laminate sheet 2 that cover the electrode body 4 is tensed in the direction of the fusion region of the second time. Due thereto, as illustrated in Fig. 4, the electrode body 4 and the laminate sheet 2 can be adhered tightly to one another, and the gap 8 between the electrode body 4 and the laminate sheet 2 is eliminated.
Note that the fusing of the second time is carried out such that the ratio ((L_{S0}-2×L₂)/L_{E}) of the length that is obtained by subtracting a value that is twice the length L₂ of the region that is not fused in the fusing step of the first time among the region that is fused in the fusing step of the second time, from the inner peripheral length L_{S0} of the laminate sheet 2 after the fusing in the fusing step of the first time and before the fusing in the fusing step of the second time, and the outer peripheral length L_{E} of the electrode body 4, is greater than or equal to 1.00 and less than or equal to 1.05. Due thereto, the regions of the laminate sheet 2 that cover the electrode body 4 can be sufficiently pulled-in in the direction of the fusion region of the second time, and the gap 8 between the electrode body 4 and the laminate sheet 2 can be eliminated well. As a result, in the manufactured battery, a ratio (L_{S1}/L_{E}) of the outer peripheral length L_{E} of the electrode body 4 and inner peripheral length L_{S1} of the laminate sheet 2 that covers the electrode body 4 can be controlled to be in a range of greater than or equal to 1.00 and less than or equal to 1.05.

In this way, due to the electrode body 4 being laminated by the laminate sheet 2 in the above-described fusing steps of the first time and the second time, as illustrated in Fig. 5, a laminated battery 10 in which the electrode body 4 and the laminate sheet 2 are adhered together well is obtained.

Conventionally, a laminating device that laminates an electrode by a laminate sheet carries out the laminating of electrodes of various sizes, i.e., electrodes at which there is dispersion in sizes. However, at the time of laminating small-sized electrodes, the laminate sheet and the electrode cannot be made to adhere together precisely, and there are cases in which excess portions (i.e., slack) arise at the laminate sheet, and wrinkles form at these excess portions. At portions of a laminate sheet where wrinkles form, damage or breakage may occur, and it is easy for the structural durability to deteriorate.

In contrast, in accordance with the method of manufacturing a laminated battery relating to the present disclosure, a laminated battery in which the electrode body and the laminate sheet are adhered together well is obtained. Therefore, the formation of wrinkles at the laminate sheet can be suppressed, and good structural durability can be obtained.

Note that, in the present disclosure, as illustrated in Fig. 3 and Fig. 4, a portion of the region that is fused in the fusing step of the second time may overlap the fusion region of the first time. Further, there may be a form in which the fusion region of the second time and the fusion region of the first time do not overlap, but, in this case, it is preferable that the position of the electrode-side end portion of the fusion region of the first time and the position of the end portion, which is at the side opposite the electrode, of the fusion region of the second time coincide.
Further, the same members as the fusing members 6A and 6B that are used in the fusing step of the first time may be used as the fusing members 6C and 6D that are used in the fusing step of the second time.

### <Laminated Battery>

A laminated battery relating to the present disclosure is described next by using the drawings.
Fig. 6 is a schematic sectional view illustrating the fused portion at the time when the laminated battery relating to an embodiment of the present disclosure is manufactured. (A) is an enlarged sectional view illustrating, in an enlarged manner, the fused portion before the fusing step of the first time is carried out. (B) is an enlarged sectional view illustrating the fused portion after the fusing step of the first time has been carried out and before the fusing step of the second time is carried out. (C) is an enlarged sectional view illustrating the fused portion after the fusing step of the second time has been carried out.

As illustrated in Fig. 6(C), at the laminated battery relating to the embodiment of the present disclosure, one end side 2A and another end side 2B of the laminate sheet are fused at the fused portion 20. The fused portion 20 has a step portion at which a thickness N of the region near the electrode body side (the left side in Fig. 6) is thinner than a thickness M of the region that is far from the electrode body side. This step portion is formed due to the fusing of the first time being carried out on fusion region X1 of the first time at the laminate sheet at which the one end side 2A and the another end side 2B are superposed as illustrated in Fig. 6(A), and then, fusing of the second time being carried out on fusion region X2 of the second time of the laminate sheet as illustrated in Fig. 6(B). Namely, the thickness M of the region that is far from the electrode body side is thicker than the region where the fusion region X1 of the first time and the fusion region X2 of the second time overlap, and the thickness N of the fusion region X2 of the second time is thinner than the thickness M. Note that a thickness L of the region that is even further from the electrode body side than the thickness M is thinner than the thickness M. As described above, the fused portion 20 having the step portion at which the thickness N of the region near the electrode body side is thinner than the thickness M of the region far from the electrode body side means that the fused portion is formed due to the formation of the fused portion being carried out by fusing steps of the second time on that are carried out while shifting the position, and a region, which is further from the electrode body side than the region that is fused in the fusing step of the second time, being fused in the fusing step of the first time, and a region, which is nearer to the electrode body side than the region that is fused in the fusing step of the first time, being fused in the fusing step of the second time.

Further, at the laminated battery relating to the embodiment of the present disclosure, the ratio (L_{S1}/L_{E}) of the outer peripheral length L_{E} of the electrode body and the inner peripheral length L_{S1} of the laminate sheet that covers the electrode body is greater than or equal to 1.00 and less than or equal to 1.05. In other words, as illustrated in Fig. 5, this means that the electrode body 4 and the laminate sheet 2 are adhered together well, and the gap 8 between the electrode body 4 and the laminate sheet 2 is reduced. The outer peripheral length L_{E} of the electrode body means the total length of the shortest distances of the four surfaces in the direction in which the one laminate sheet is wrapped around. The inner peripheral length L_{S1} of the laminate sheet that covers the electrode body means the length, in the direction in which the one laminate sheet is wrapped around the electrode body, at the surfaces that contact the electrode body. Note that, in a case in which there is a gap between the laminate sheet and the electrode body, and in a case in which wrinkles arise at a portion having the gap, the inner peripheral length L_{S1} includes the length of the surface at the inner peripheral side of the laminate sheet at the gap portion, and the length of the surface at the inner peripheral side of the laminate sheet at the portion at which wrinkles form.

In this way, at the laminated battery relating to the embodiment of the present disclosure at which the fused portion has a step portion at which the thickness N of the region near the electrode body side is thinner than the thickness M at the region far from the electrode body side and at which the ratio (L_{S1}/L_{E}) is controlled to be in the above-described range, the formation of wrinkles in the laminate sheet can be suppressed, and high structural durability can be obtained.

Note that it is more preferable that the ratio (L_{S1}/L_{E}) is greater than or equal to 1.0 and less than or equal to 1.03, and even more preferable that the ratio (L_{S1}/L_{E}) is 1.0 (i.e., that the outer peripheral length L_{E} of the electrode body and the inner peripheral length L_{S1} of the laminate sheet that covers the electrode body are equal).

With regard to the size of the step at the step portion, it is preferable that the minimum value of the difference (t1-t2) between a thickness t1 of the thickest place at the region near the electrode body side and a thickness t2 of the thinnest place at the region far from the electrode body side, is greater than or equal to 10 µm, and it is preferable that the maximum value be less than or equal to 50% of the thicknesses of two laminate films (the thickness at a place where there is no fused portion). Moreover, it is more preferable that the difference (t1-t2) be greater than or equal to 10 µm and less than or equal to 150 µm.

### <Members of Battery>

The respective members that structure the laminated battery relating to the present disclosure are described next.

### (1) Electrode Body

The electrode body usually has a positive current collector, a positive electrode active material layer, an electrolyte layer, a negative electrode active material layer and a negative electrode current collector, in that order in the thickness direction.

The positive electrode active material layer contains at least a positive electrode active material. The positive electrode active material layer may further include at least one of a conductive material, an electrolyte, and a binder. The shape of the positive electrode active material is particulate-shaped for example. Oxide active materials are examples of the positive electrode active material. Further, sulfur (S) may be used as the positive electrode active material.

It is preferable that the positive electrode active material contain a lithium composite oxide. The lithium composite oxide may contain at least one type selected from the group consisting of F, Cl, N, S, Br and I. Further, the lithium composite oxide may have a crystal structure belonging to at least one space group selected from space groups R-3m, Immm, and P63-mmc (also called P63mc, P6/mmc). In the lithium composite oxide, the main sequence of a transition metal, oxygen and lithium may be an O2-type structure.

Examples of lithium composite oxides having a crystal structure belonging to R-3m are compounds expressed by LiₓMe_{y}O_{α}X_{β} (Me represents at least one type selected from the group consisting of Mn, Co, Ni, Fe, Al, Cu, V, Nb, Mo, Ti, Cr, Zr, Zn, Na, K, Ca, Mg, Pt, Au, Ag, Ru, W, B, Si and P, and X represents at least one type selected from the group consisting of F, Cl, N, S, Br and I, and 0.5<x<1.5, 0.5≤y≤1.0, 1≤α<2, 0<β≤1 are satisfied).

Examples of lithium composite oxides having a crystal structure belonging to Immm are composite oxides expressed by Liₓ₁M¹A¹₂ (1.5≤x1≤2.3 is satisfied, M¹ includes at least one type selected from the group consisting of Ni, Co, Mn, Cu and Fe, A¹ includes at least oxygen, and the ratio of the oxygen contained in A¹ is greater than or equal to 85 atom%) (a specific example is Li₂NiO₂), and composite oxides expressed by Liₓ₁M^{1A}₁₋ₓ₂M^{1B}ₓ₂O_{2-y}A²_{y} (0≤x2≤0.5 and 0≤y≤0.3, at least one of x2 and y is not 0, M^{1A} represents at least one type selected from the group consisting of Ni, Co, Mn, Cu and Fe, M^{1B} represents at least one type selected from the group consisting of Al, Mg, Sc, Ti, Cr, V, Zn, Ga, Zr, Mo, Nb, Ta and W, and A2 represents at least one type selected from the group consisting of F, Cl, Br, S and P).

Examples of lithium composite oxides having a crystal structure belonging to P63-mmc are composite oxides expressed by M1ₓM2_{y}O₂ (M1 represents an alkali metal (at least one of Na and K is preferable), M2 represents a transition metal (at least one type selected from the group consisting of Mn, Ni, Co and Fe is preferable), and x+y satisfies 0<x+y≤2).

Examples of lithium composite oxides having an O2-type structure are composite oxides expressed by Liₓ[Li_{α(}MnₐCo_{b}M_{c})_{1-α}]O₂ (0.5<x<1.1, 0.1<α<0.33, 0.17<a<0.93, 0.03<b<0.50, 0.04<c<0.33, and M represents at least one type selected from the group consisting of Ni, Mg, Ti, Fe, Sn, Zr, Nb, Mo, W and Bi). Specific examples are Li_{0.744}[Li_{0.145}Mn_{0.625}Co_{0.115}Ni_{0.115}]O₂ and the like.

In addition to the positive electrode active material, the positive electrode preferably includes a solid electrolyte selected from the group of solid electrolytes consisting of sulfide solid electrolytes, oxide solid electrolytes, and halide solid electrolytes. A form in which at least a portion of the surface of the positive electrode active material is covered by a sulfide solid electrolyte, an oxide solid electrolyte or a halide solid electrolyte is more preferable. Li_{6-(4-x)b}(Ti₁₋ₓAlₓ)_{b}F₆ (0<x<1, 0<b≤1.5) [LTAF electrolyte] is preferable as the halide solid electrolyte that covers at least a portion of the surface of the positive electrode active material.

Carbon materials are examples of the conductive material. The electrolyte may be a solid electrolyte or may be a liquid electrolyte. The solid electrolyte may be an organic solid electrolyte such as a gel electrolyte or the like, or may be an inorganic solid electrolyte such as an oxide solid electrolyte, a sulfide solid electrolyte or the like. Liquid electrolytes (electrolyte liquids) include, for example, supporting salts such as LiPF₆ or the like, and solvents such as carbonate solvents and the like. Further, examples of the binder are rubber binders and fluoride binders.

The negative electrode active material layer contains at least a negative electrode active material. The negative electrode active material layer may further contain at least one of a conductive material, an electrolyte, and a binder. Examples of the negative electrode active material are metal active materials such as Li, Si and the like, carbon active materials such as graphite and the like, and oxide active materials such as Li₄Ti₅O₁₂ and the like. The shape of the negative electrode active material is, for example, particulate-shaped or foil-shaped. The conductive material, the electrolyte and the binder are similar to those described above.

The electrolyte layer is disposed between the positive electrode active material layer and the negative electrode active material layer, and contains at least an electrolyte. The electrolyte may be a solid electrolyte or may be a liquid electrolyte. It is preferable that the electrolyte layer be a solid electrolyte layer. The electrolyte layer may have a separator.

The solid electrolyte preferably includes at least one type of solid electrolyte selected from the group of solid electrolytes consisting of sulfide solid electrolytes, oxide solid electrolytes and halide solid electrolytes.

The sulfide solid electrolyte preferably contains sulfur (S) as the main component that is an anion element, and further, preferably contains, for example, the element Li, element A and the element S. Element A is at least one type selected from the group consisting of P, As, Sb, Si, Ge, Sn, B, Al, Ga and In. The sulfide solid electrolyte may further contain at least one of O and a halogen element. Examples of the halogen element (X) are F, Cl, Br, I and the like. The composition of the sulfide solid electrolyte is not particularly limited, and examples are xLi₂S•(100-x)P₂S₅ (70≤x≤80) and yLiI•zLiBr•(100-y-z)(xLi₂S•(1-x)P₂S₅) (0.7≤x≤0.8, 0≤y≤30, 0≤z≤30). The sulfide solid electrolyte may have the composition expressed by following general formula (1).

Li₄₋ₓGe₁₋ₓPₓS₄ (0<x<1) ... formula (1)

In formula (1), at least some of the Ge may be substituted by at least one selected from the group consisting of Sb, Si, Sn, B, Al, Ga, In, Ti, Zr, V and Nb. Further, at least some of the P may be substituted by at least one selected from the group consisting of Sb, Si, Sn, B, Al, Ga, In, Ti, Zr, V and Nb. Some of the Li may be substituted by at least one selected from the group consisting of Na, K, Mg, Ca and Zn. Some of the S may be substituted by a halogen. The halogen is at least one of F, Cl, Br and I.

The oxide solid electrolyte preferably contains oxygen (O) as the main component that is an anion element, and, for example, may contain Li, element Q (Q represents at least one of Nb, B, Al, Si, P, Ti, Zr, Mo, W and S), and O. Examples of the oxide solid electrolyte are garnet type solid electrolytes, perovskite type solid electrolytes, NASICON type solid electrolytes, Li-P-O solid electrolytes, Li-B-O solid electrolytes, and the like. Examples of garnet type solid electrolytes are Li₇La₃Zr₂O₁₂, Li₇₋ₓLa₃(Zr₂₋ₓNbₓ)O₁₂ (0≤x≤2), Li₅La₃Nb₂O₁₂, and the like. Examples of perovskite type solid electrolytes are (Li,La)TiO₃, (Li,La)NbO₃, (Li,Sr)(Ta,Zr)O₃ and the like. Examples of NASICON type solid electrolytes are Li(Al,Ti)(PO₄)₃, Li(Al,Ga)(PO₄)₃, and the like.
Examples of Li-P-O solid electrolytes are Li₃PO₄, LIPON (compounds in which some of the O in Li₃PO₄ is substituted with N). Examples of Li-B-O solid electrolytes are Li₃BO₃, compounds in which some of the O in Li₃BO₃ is substituted with C, and the like.

As the halide solid electrolyte, solid electrolytes containing Li, M and X (M represents at least one of Ti, Al and Y, and X represents F, Cl or Br) are suitable. Specifically, Li_{6-3z}Y_{z}X₆ (X represents Cl or Br, and z satisfies 0<z<2) and Li₆₋(₄₋ₓ)_{b}(Ti₁₋ₓAlₓ)_{b}F₆ (0<x<1, 0<b≤1.5) are preferable. Among Li_{6-3z}Y_{z}X₆, from the standpoint of having excellent lithium ion conductivity, Li₃YX₆ (X represents Cl or Br) is more preferable, and Li₃YCl₆ is even more preferable. Further, from standpoints such as, for example, suppressing oxidative decomposition of the sulfide solid electrolyte and the like, it is preferable that Li_{6-(4-x)b}(Ti₁₋ₓAlₓ)_{b}F₆ (0<x<1, 0<b≤1.5) be contained together with a solid electrolyte such as a sulfide solid electrolyte or the like.

The positive electrode current collector carries out current collection of the positive electrode active material layer. Examples of the positive electrode current collector are stainless steel, aluminum, nickel, iron, titanium, carbon and the like, and an aluminum alloy foil or an aluminum foil is preferable. The aluminum alloy foil or aluminum foil may be manufactured by using a powder. Examples of the form of the positive electrode current collector are the form of a foil and the form of a mesh. The positive electrode current collector may have a positive electrode tab for connection with a positive electrode current collector terminal.

The negative electrode current collector carries out current collection of the negative electrode active material layer. Examples of the material of the negative electrode current collector are metals such as copper, SUS, nickel and the like. Examples of the form of the negative electrode current collector are the form of a foil and the form of a mesh. The negative electrode current collector has a negative electrode tab for connection with a negative electrode current collector terminal.

The electrode body of the present disclosure may have side surface members for example. The side surface members are disposed at the side surface portions of the electrode body. The side surface members are not particularly limited provided that they are members disposed at the side surface portions of the electrode body, but are preferably current collector terminals. A current collector terminal is a terminal having a current collector portion at at least a portion thereof. For example, the current collector portion is electrically connected to a tab at the electrode body. The entire current collector terminal may be a current collector portion, or a portion of the current collector terminal may be a current collector portion. Further, the side surface members may be exterior members that do not have a power collecting function.

Metals such as SUS and the like are examples of the material of the side surface members. Further, a form in which the side surface member has a covering resin layer on the surface thereof that contacts the laminate film at the obverse, is an example. Examples of the material of the covering resin layer are olefin resins such as polypropylene (PP), polyethylene (PE) and the like. The thickness of the covering resin layer is, for example, greater than or equal to 40 µm and less than or equal to 150 µm.

### (4) Laminate Sheet

A laminate film is an example of the laminate sheet of the present disclosure. The laminate film has at least a structure having a resin layer and a metal layer, and, for example, has a structure having a fused resin layer (thermal bonding layer) on one surface of a metal layer (the inner side surface forming the fused portion). Further, the laminate film may have a fused resin layer (thermal bonding layer), a metal layer and a protective resin layer in that order along the thickness direction. Examples of the material of the fused resin layer (thermal bonding layer) are olefin resins such as polypropylene (PP), polyethylene (PE) and the like. Examples of the material of the metal layer are aluminum, aluminum alloys, and stainless steel. Examples of the material of the protective resin layer are polyethylene terephthalate (PET) and nylon. The thickness of the fused resin layer (thermal bonding layer) is, for example, greater than or equal to 40 µm and less than or equal to 100 µm. The thickness of the metal layer is, for example, greater than or equal to 30 µm and less than or equal to 60 µm. The thickness of the protective resin layer is, for example, greater than or equal to 20 µm and less than or equal to 60 µm. The thickness of the entire laminate film is, for example, greater than or equal to 70 µm and less than or equal to 220 µm.

### (3) Battery

The battery in the present disclosure is typically a lithium ion secondary battery, and a solid-state battery is preferable. So-called all-solid-state batteries that use an inorganic solid electrolyte as the electrolyte are included among solid-state batteries.

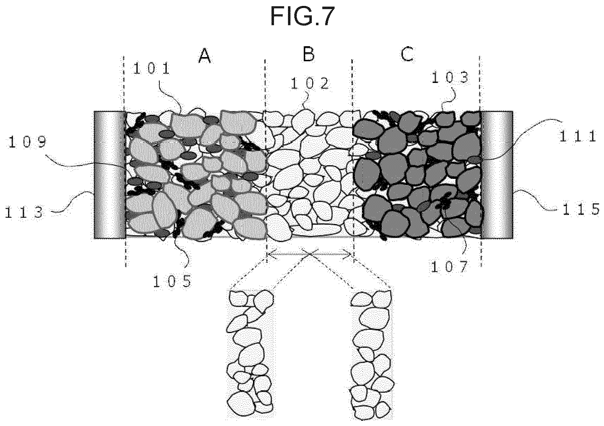

The structure of the solid-state battery is a layered structure of a positive electrode / a solid electrolyte layer / a negative electrode.
The positive electrode has a positive electrode active material layer and a current collector, and the negative electrode has a negative electrode active material layer and a current collector.
The solid electrolyte layer may be a single-layer structure, or may be a multilayer structure of two or more layers.
For example, the solid-state battery may have the cross-sectional structure illustrated in Fig. 7, and a solid electrolyte layer B may be a two-layer structure as illustrated in Fig. 7. Fig. 7 is a schematic sectional view illustrating an example of a solid-state battery. The solid-state battery illustrated in Fig. 7 has a negative electrode including a negative electrode current collector 113 and a negative electrode active material layer A, and the solid electrolyte layer B, and a positive electrode including a positive electrode current collector 115 and a positive electrode active material layer C. The negative electrode active material layer A includes a negative electrode active material 101, a conduction assistant 105, and a binder 109. The positive electrode active material layer C includes a covered positive electrode active material 103, a conduction assistant 107 and a binder 111. The surface of the positive electrode active material at the covered positive electrode active material 103 is covered by LTAF electrolyte or LiNbO₃ electrolyte.
Further, the solid-state battery may be structured such that the layer end surfaces (side surfaces) of a layered structure of a positive electrode / a solid electrolyte layer / a negative electrode are sealed by a resin. The current collector of the electrode may be a structure in which a shock-absorbing layer, an elastic layer or a PTC (Positive Temperature Coefficient) thermistor layer is disposed on the surface of the current collector.

An example of the intended use of the battery is the power source of a vehicle such as, for example, a hybrid vehicle (HEV), a plug-in hybrid vehicle (PHEV), an electric vehicle (BEV), a gasoline-powered vehicle, a diesel-powered vehicle or the like. The battery is particularly preferably used as the power source for driving of an HEV, PHEV or BEV. Further, the battery of the present disclosure may be used as the power source of a moving body other than a vehicle (e.g., a train, a boat, an airplane), or may be used as the power source of an electronic product such as an information processing device or the like.

The present disclosure is not limited to the above-described embodiment. The above embodiment is illustrative, and all forms that have substantially the same structures as, and exhibit similar operations and effects as, the technical concepts put forth in the claims of the present disclosure are included in the technical scope of the present disclosure.

## Claims

1. A laminated battery comprising:
an electrode body; and
a laminate sheet that covers the electrode body,
wherein:
the laminated battery has a fused portion at which one end side and another end side of the laminate sheet, which covers the electrode body, are fused,
the fused portion has a step portion at which a thickness of a region near an electrode body side is thinner than a thickness of a region far from the electrode body side, and
a ratio (L_{S1}/L_{E}) of an outer peripheral length L_{E} of the electrode body and an inner peripheral length L_{S1} of the laminate sheet that covers the electrode body is greater than or equal to 1.00 and less than or equal to 1.05.

2. The laminated battery of claim 1, wherein the ratio (L_{S1}/L_{E}) is 1.00.

3. The laminated battery of claim 1 or claim 2, wherein, at the step portion, a difference (t1-t2) between a thickness t1 at a thickest place of the region near the electrode body side and a thickness t2 at a thinnest place of the region far from the electrode body side is greater than or equal to 10 µm and less than or equal to 150 µm.

4. A method of manufacturing a laminated battery having:
an electrode body; and
a laminate sheet that covers the electrode body,
wherein:
the laminated battery has a fused portion at which one end side and another end side of the laminate sheet, which covers the electrode body, are fused,
the fused portion is formed by fusing steps that are carried out two or more times, while shifting a position;
a region, which is further from an electrode body side than a region fused in a fusing step of a second time, is fused in a fusing step of a first time; and
a region, which is nearer to the electrode body side than a region fused in the fusing step of the first time, is fused in the fusing step of the second time, and fusing in the fusing step of the second time is carried out such that a ratio ((L_{S0}-2×L₂)/L_{E}) of a length obtained by subtracting a value that is twice a length L₂ from an end portion at the electrode body side of the region fused in the fusing step of the first time to an end portion at the electrode body side of the region fused in the fusing step of the second time, from an inner peripheral length L_{S0} of the laminate sheet after fusing in the fusing step of the first time and before fusing in the fusing step of the second time, and an outer peripheral length L_{E} of the electrode body, is greater than or equal to 1.00 and less than or equal to 1.05.

5. The method of manufacturing a laminated battery of claim 4, wherein:
the fused portion, after having undergone the fusing step of the second time, has a step portion at which a thickness of a region near the electrode body side is thinner than a thickness of a region far from the electrode body side, and
at the step portion, a difference (t1-t2) between a thickness t1 at a thickest place of the region near the electrode body side and a thickness t2 at a thinnest place of the region far from the electrode body side is greater than or equal to 10 µm and less than or equal to 150 µm.
